# Europäisches Patentamt

## European Patent Office

## Office européen des brevets

(11) Veröffentlichungsnummer: **0 046 530**

**A1**

(12) **EUROPÄISCHE PATENTANMELDUNG**

(21) Anmeldenummer: **81106185.2**

(22) Anmeldetag: **07.08.81**

(51) Int. Cl.³: **H 02 J 3/38**
**H 02 P 9/42, F 03 D 9/00**

(30) Priorität: **14.08.80 NL 8004597**

(43) Veröffentlichungstag der Anmeldung:
**03.03.82 Patentblatt 82/9**

(84) Benannte Vertragsstaaten:
**BE DE FR GB IT NL**

(71) Anmelder: **Stichting Energieonderzoek Centrum Nederland**
**Scheveningseweg 112**
**NL-2584 AE 's-Gravenhage(NL)**

(72) Erfinder: **Offringa, Lodewijk Jacob Jan**
**Maalakker 42**
**Eindhoven(NL)**

(72) Erfinder: **de Zeeuw, Willem Jan**
**Beukenlaan 12**
**Nunen(NL)**

(74) Vertreter: **Bauer, Hubert**
**Lothringer Strasse 53**
**D-5100 Aachen(DE)**

(54) **Verfahren und Vorrichtung zum optimalen Benutzen mindestens einer variablen, schwer beherrschbaren Energiequelle.**

(57) Es wird ein Verfahren und eine Anlage zur optimalen Benutzung mindestens einer variablen, schwer beherrschbaren Energiequelle beschrieben.

Bei bekannten Energiesystemen mit einer schwer beherrschbaren Energiequelle ist es üblich, mit dieser einen oder mehrere synchrone Wechselstromgeneratoren zu kuppeln, die mit einem Gleichrichter und einem Wechselrichter an ein autonomes Wechselstromnetz anschließbar sind. Das Wechselstromnetz ist dabei mit einem zweiten synchronen Wechselstromgenerator verbunden, der mechanisch mit einer beherrschbaren Hilfsmaschine, wie z.B. ein Dieselaggregat, entkuppelbar verbunden ist.

Um die Frequenz des Netzes bei einem Leistungsüberangebot oder aber auch bei abgefallenem Leistungsangebot konstant zu halten, wird einem zusätzlich nutzbaren Verbraucher (2) eine solche Energiemenge aus dem autonomen Wechselstromnetz (5) zugeführt, daß die Frequenz des Netzes (5) konstant bleibt. Die abzuleitende überschüssige Energie kann beispielsweise zur Heißwasserbereitung oder zur Elektrolyse von Wasser, kombiniert mit der Benutzung von Brennstoffzellen, oder für das Aufladen von Batterien oder das Hochpumpen von Wasser verwendet werden.

FIG.2

## Verfahren und Vorrichtung zum optimalen Benutzen mindestens einer variablen, schwer beherrschbaren Energiequelle

Die Erfindung bezieht sich auf ein Verfahren zur optimalen Nutzung mindestens einer schwer beherrschbaren Energiequelle, wobei ein Energiesystem verwendet wird, das im wesentlichen umfaßt: mindestens eine variable Energiequelle, mindestens einen damit gekuppelten synchronen Wechselstromgenerator mit einem nachgeschalteten Gleichrichter, einen Wechselrichter und ein daran angeschlossenes autonomes Wechselstromnetz, das elektrisch fest verbunden ist mit einem zweiten synchronen Wechselstromgenerator, welcher mechanisch mit einer beherrschbaren Hilfsmaschine kuppelbar ist.

Das obengenannte Verfahren läßt sich im allgemeinen problemlos durchführen, wenn ein großes Wechselstromnetz verfügbar ist, das die durch die variablen Energiequellen freigesetzte Energie auffangen kann. Die Anpassung an die schwankende elektrische Leistung und die Kompensation der eventuell geforderten reaktiven Leistung werden in diesem Fall selbstverständlich der konventionellen elektrischen Zentrale im Netz überlassen. Die Situation ist jedoch ganz anders, wenn ein derartiges großes Netz nicht verfügbar ist und mehr noch, wenn insbesondere ein kleines "autonomes Netz" im wesentlichen durch Windenergie zu versorgen ist. Im Sinne der Anmeldung bedeutet "autonomes Netz" ein Netz, an dem keine untereinander gekuppelten oder kuppelbaren großen thermischen Zentralen, Kern- oder Wasserkraftzentralen angeschlossen sind, sondern das seine Energie nur von einer oder mehreren variablen Energiequellen erhält.

Wenn diese Quelle zu wenig Energie liefert, wird die
Energie durch eine Hilfsmaschine (z.B. durch Dieselaggregate) geliefert.

Ein derartiges autonomes, mit Windenergie betriebenes
Netz will man vorzugsweise ganz mit dieser Energie versorgen. Wegen des Preises von fossilen Brennstoffen
und insbesondere des von Dieselöl wünscht man, so
wenig wie möglich davon zu verbrauchen und statt dessen
die durch den Wind oder andere variable Energiequellen
gelieferte Leistung auf optimale Weise zu benutzen. Das
Problem der hohen Brennstoffpreise und das Fehlen eines
großen gekoppelten Wechselstromnetzes tritt insbesondere
in entlegenen Gegenden auf, für die es nicht wirtschaftlich ist, lange Versorgungsleitungen zu verlegen und
Kuppelstationen für ein elektrisches Netz zu bauen.

Ein "autonomes Netz" ist z.B. das Bordnetz eines Schiffes.
In der niederländischen Patentanmeldung 6o8733 wird
dafür eine Stromzufuhreinrichtung betrieben, die aus
einem durch die Schraubachse angetriebenen synchronen
Generator besteht, hinter dem ein nicht gesteuerter
Gleichrichter geschaltet ist, wobei für die Versorgung des
Bordnetzes bei ausgeschaltetem Achsgenerator wenigstens
eine durch eine Hilfsmaschine angetriebene synchrone
Maschine als Bordgenerator verwendet wird. Hinter dem
Gleichrichter ist ein durch das Netz gesteuerter, das
Bordnetz speisender Stromumsetzer geschaltet. Die als
Bordnetzgenerator für den ausgeschalteten Achsgenerator
arbeitende synchrone Maschine ist auch während des
Betriebes des Achsgenerators elektrisch fest mit dem
Ausgang des Stromumsetzers und mit dem Bordnetz verbunden.

Diese letztgenannte synchrone Maschine hat neben der Funktion zur Speisung des Bordnetzes gleichzeit die Funktion einer Kommutatoreinrichtung für den Stromumsetzer.

Die Schraubachse gibt für diese Einrichtung nur die Leistung ab, die unabhängig von der Drehzahl der Achse für die Speisung des autonomen Netzes benötigt wird. Die Regelung der abzugebenden Leistung und damit auch der Frequenz geschieht durch bekannte Weise durch Regelung der Feldstärke des Achsgenerators.

Bei Benutzung einer Windturbine als Energiequelle wird man jedoch diese unabhängig von der Abnahme durch das autonome Netz immer so optimal wie möglich benutzen. Außerdem sind die Schwankungen in der Windenergie manchmal so schnell, daß eine Regelung mittels der Feldstärke des Generators zu langsam ist.

Der Erfindung liegt die Aufgabe zugrunde, ein Verfahren zur Nutzung von Energie vorzuschlagen, welche durch mindestens eine variable, schwer beherrschbare Energiequelle, wie eine Windturbine, erzeugt wird, wobei alle zugeführte Energie dauernd optimal genutzt und die Frequenz des Netzes selbst bei rasch wechselnden Schwankungen in der zugeführten Energie und/oder bei relativ großen Veränderungen in der Abnahme durch das Netz konstant gehalten werden soll. Mit der in der niederländischen Patentanmeldung 6708733 beschriebenen Regelung ist das nicht möglich.

Die kombinierte Aufgabe einer dauernden optimalen Nutzung der zugeführten Energie und der schnellen Anpassung an deren Schwankungen wird durch die Erfindung auf einfache Weise gelöst, wenn aus dem Energiesystem neben dem autonomen Netz in einer derartigen Menge Energie eingespeist werden kann, daß die Frequenz des Netzes gleich bleibt. Die eingespeiste Energie wird dabei genutzt.

Die Erfindung bezieht sich auch auf ein System mit einem autonomen Netz, im wesentlichen bestehend aus einem ersten synchronen Generator, dem ein Gleichrichter nachgeschaltet ist, gekuppelt mit einem Wechselrichter, der das Netz speisen kann, und wobei ein zweiter synchroner Generator fest mit dem Netz verbunden ist und mechanisch entkuppelbar mit einer leicht beherrschbaren Hilfsmaschine. Nach der Erfindung ist das Energiesystem mit Mitteln versehen, um die Netzfrequenz konstant zu halten. Diese Mittel bestehen aus einem zusätzlichen, nützlich zu verwendenden elektrischen Verbraucher, welcher mittels einer Regeleinheit elektrisch mit dem System verbunden ist.

Es ist selbstverständlich, daß man die zugeführte Windenergie immer optimal zu nutzen wünscht, unabhängig von der Abnahme vom autonomen Netz. Fortwährende schnelle Schwankungen in der Windgeschwindigkeit sind jedoch die Ursache dafür, daß das Energieangebot auch sehr schnell schwankt. Um trotz dieser schnellen Schwankungen die Frequenz des autonomen Netzes konstant zu halten, ist eine schnelle Regelmöglichkeit notwendig.

Es sei angenommen, daß die Windturbine gerade genügend
Energie für das Netz liefert. Die Hilfsmaschine ist in
diesem Fall entkuppelt, aber der zweite Generator dreht,
liefert Blindenergie und bestimmt die Spannungsform
(sinusförmig) und bleibt spannungserregend für den
Wechselrichter, der durch den Gleichrichter hinter dem
Windgenerator über eine Drosselspule mit Gleichstrom
gespeist wird. Wenn die Windenergie zunimmt oder die
Abnahme durch das Netz sich verringert, wird der zweite
Generator sich beschleunigt drehen und demzufolge wird die
Netzfrequenz zunehmen. Das wird nun ausgeglichen, indem
das Überangebot in einer anderen nützlichen Verwendung
als durch das Netz abgeleitet wird. Insbesondere bei
sehr kurzen Stößen eines Überangebots an Energie wirkt
die Veränderung des Blattwinkels der Windturbine oder
eine Veränderung der Feldstärkeregelung des ersten
Generators zu langsam; außerdem wird bei derartigen
Eingriffen die angebotene Energie nicht mehr optimal
genutzt.

Es kommt für die Erfindung an sich nicht darauf an, wo
man die nützlich zu verwendende Energie aus dem System
abnimmt. Die zusätzlich nutzbare Belastung kann vom
autonomen Netz abgenommen werden. Eine andere Möglichkeit ist, Gleichstrom zwischen Gleichrichter und Wechselrichter abzunehmen. Wieder eine andere denkbare Stelle
für die zusätzliche nutzbare Belastung ist vor dem
Gleichrichter hinter dem ersten Generator.

Die Erfindung stellt sich ausdrücklich die Aufgabe, zum
Stabilisieren des elektrischen Systems bei großem Energieangebot das Überangebot an Energie abzuleiten und nützlich zu verwenden. Dabei ist z.B. an eine Heißwasserbereitung zu denken oder an eine Speicherung dieser Energie, so daß sie im Falle eines ungenügenden Angebots an Windenergie wieder verwendet werden kann. Es besteht z.B. als Verwendungsmöglichkeit die Elektrolyse von Wasser, wobei der gebildete Wasserstoff und Sauerstoff mit Hilfe von Brennstoffzellen wieder elektrische Energie liefern können. Außerdem sind auch die Speicherung in Batterien oder das Hochpumpen von Wasser und die Nutzung der potentiellen Wasserenergie denkbar.

Wenn die Energie aus dem Wechselstromteil des Systems abgenommen wird, wird ein regelbarer Gleichrichter benutzt. Die Regelbarkeit ist notwendig, um die Netzfrequenz des autonomen Netzes konstant zu halten.

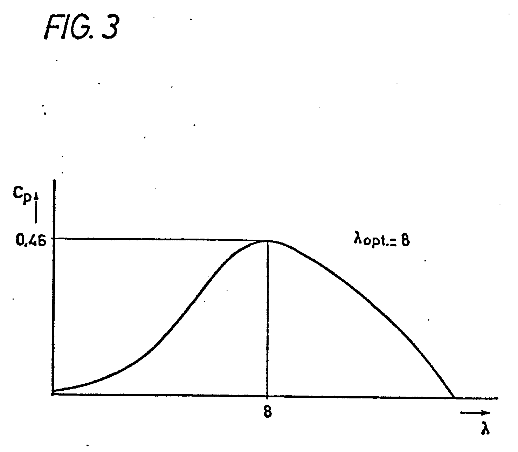

In vielen Fällen wird man als variable Energiequelle mehr als eine Windturbine verwenden. Die Eigenschaft von mehreren Windturbinen ist diese, daß, wenn der Blattstand soviel wie möglich auf eine maximale Energielieferung abgestellt wird, die Turbinen nicht selbstanlaufend sind. Ein dieser Beschreibung zugefügter Anhang über "Turbineneigenschaften", mit zugehöriger Fig. 3, gibt weitere Erläuterungen.

Eine bevorzugte Ausführungsform des neuen Energiesystems verwendet als Energiequelle eine oder mehrere Windturbine/n, welche gekuppelt ist/sind mit elektrischen synchronen Generatoren mit Mitteln, um diese durch Drehstromspeisung zwischen den mit den beherrschbaren Energiequellen gekuppelten zweiten synchronen Generatoren zu starten. Dabei werden die ersten synchronen Generatoren z.B. mit einer zusätzlichen Feldregelung versehen. Die Windturbinen werden in diesem Fall aus dem Stillstand wegen Windstille oder Schutz gegen Sturm mittels der elektrischen Generatoren wieder gestartet. Die Generatoren sind ihrerseits mit den beherrschbaren Energiequellen verbunden, so daß die Windturbinen in diesem Fall mittels der beherrschbaren Energiequelle anlaufen werden.

Der zusätzlich nutzbare Verbraucher wird mittels eines regelbaren Gleichrichters immer daran angepaßt, was das gesamte Energiesystem benötigt.

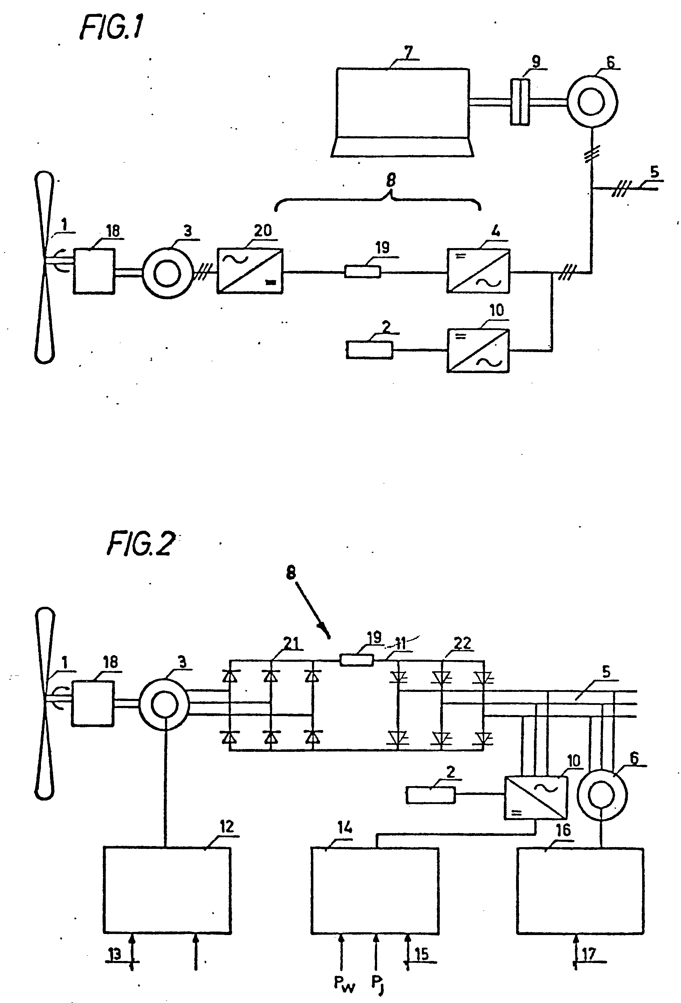

Obwohl ebenfalls andere aus Gleichrichter und Wechselrichter bestehende Einrichtungen mit niedrigerem Wirkungsgrad verwendbar sind, wird man vorzugsweise einen netzkommutierten Inverter für die Zufuhr der Energie benutzen, die durch die variable Energiequelle des autonomen Netzes angeboten wird. In diesem Fall ist der mit dem Netz kommutierte Inverter ein Dreiphasen-Brücken-Mutator, wie in Fig. 2 wiedergegeben.

In Anbetracht dessen, daß die Windgeschwindigkeit im allgemeinen auch sehr kurze Schwankungen zeigt, ist es möglich, daß bei gerade ausreichender Dimensionierung des Systems die Netzfrequenz manchmal doch variiert. Man kann das auch dadurch ausgleichen, daß man als mit den beherrschbaren Energiequellen verbundene Generatoren Maschinen mit einem großen Trägheitsmoment

verwendet. Diese Lösung ist in der Anlage 2 "Systembeherrschung" näher erläutert.

Vorzugsweise wird man als beherrschbare Hilfsmaschine
wegen der guten Regelmöglichkeiten und Zuverlässigkeit
eine oder mehrere Dieselmaschinen verwenden. Wenn zu
wenig oder zu viel Energieangebot da ist, macht das Ein-
und Ausschalten dieser Maschine für den Fachmann keine
Schwierigkeiten. Eine gute Regelung ist jedoch eine
absolute Forderung.

Das Energiesystem nach der Erfindung kann am besten für
ein autonomes Netz, das in der Hauptsache auf Windenergieversorgung beruht, durch das gleichzeitige Verwenden von
drei Regelsystemen realisiert werden, und zwar wie folgt:

a) eine Regelung der Drehzahl der Windturbinen, welche
   verbunden ist mit an diese Windturbinen gekuppelten
   elektrischen synchronen Generatoren und gesteuert
   durch die durch den Wind an diese Turbinen abgegebene Leistung $P_W$ und die Winkelgeschwindigkeit des
   Rotors dieser Turbinen;

b) eine Regelung der Frequenz des elektrischen autonomen
   Netzes durch Steuerung des zusätzlich nutzbaren Verbrauchers und gesteuert von der durch den Wind an
   die Turbine/n abgegebene Leistung $P_W$, der elektrischen Belastung P des autonomen Netzes und der
   Frequenz dieses Netzes;

c) eine Spannungsregelung des autonomen Netzes, welche
   an den synchronen Generatoren angeschlossen ist

und durch die Netzspannung selber gesteuert wird.

Vorzugsweise wird bei dem vorbeschriebenen Regelsystem die Netzspannung durch Feldstärkeregelung der zweiten synchronen Generatoren konstant gehalten, soweit die gemessene Netzspannung dies fordert.

Ein Ausführungsbeispiel zur Durchführung des erfindungsgemäßen Verfahrens ist in der Zeichnung schematisch dargestellt.

In Fig. 1 ist mit 1 eine Windturbine bezeichnet, welche z.B. mit ihrer Achse horizontal angeordnet sein kann. Diese Windturbine 1 ist über ein Getriebe 18 an einen synchronen elektrischen Generator 3 gekuppelt. Ein autonomes Netz 5 kann, wenn der Wind nicht genügend Energie liefert oder wenn dies im Zusammenhang mit der Stabilität der Netzspannung und Netzfrequenz notwendig ist, auch elektrische Energie von einem synchronen elektrischen Generator erhalten, der über eine Kupplung 9 durch eine Dieselmaschine 7 angetrieben werden kann. Die Dieselmaschine 7 kann dabei von dem zugehörigen elektrischen Generator entkuppelt werden. Wenn die Dieselmaschine völlig entkuppelt ist, dreht der synchrone Generator 6 weiter und sorgt dabei für die Spannungsform im autonomen Netz. Gemäß Fig. 1 bekommt eine regelbare elektrische Verbrauchsvorrichtung 2 ihre Energie mittels eines regelbaren Gleichrichters 1o zugeführt, welcher in diesem Fall im autonomen Netz 5 zwischengeschaltet ist. Ein Umsetzer 8 besteht aus einem System mit einer Anzahl Gleichrichter 2o und Wechselrichter 4. In Fig. 1 ist mittels drei kleiner Schraffierungen verdeutlicht, daß die Generatoren Drehstrom liefern und auch wo dieser Drehstrom an den Umsetzer 8 abgegeben wird. Ebenso ist das autonome Netz 5 und der regelbare Gleichrichter 1o verdeutlicht, welcher von der regelbaren elektrischen Verbrauchsvorrichtung 2 angeordnet ist. Im Umsetzer 8 befindet sich eine mit 19 bezeichnete Drosselspule.

Fig. 2 gibt in Details ein Regelschema an. Hierin werden gleichzeitig drei Regelsysteme verwendet, und zwar:

a) Das Feld des synchronen Generators 3 wird derartig geregelt, daß die Drehzahl der Windturbine 1 optimal ist. Dies wird erreicht durch die gleichzeitige Verwendung einer Regelung 12 auf den elektrischen Generator 3, wobei als variable Größen die Winkelgeschwindigkeit 13 des Rotors der Windturbine 1 und die durch den Wind gelieferte Leistung $P_W$ berücksichtigt wird. Das eine oder andere wird näher erläutert im Anhang "Turbineneigenschaften";

b) Ein Frequenzregler 14 des autonomen Netzes 5, der in diesem Fall mit dem regelbaren Gleichrichter 1o verbunden ist, der die Energie liefert, ist an die regelbare Verbrauchsvorrichtung 2 angeschlossen. Als variable Größen werden dieser Regelung 14 die Netzfrequenz 15 und die durch das Netz abgegebene Leistung $P_\ell$ und die durch den Wind gelieferte Leistung $P_W$ zugeführt. In diese Regelung werden an erster Stelle die Netzfrequenz und weiter eine Differenz zwischen der durch den Wind gelieferten Leistung $P_W$ und der durch das Netz abgenommenen Leistung P berücksichtigt. Wenn der Wind genügend Leistung liefert, wird an erster Stelle die durch die zusätzlich nutzbare Verbrauchsvorrichtung 2 abgenommene Leistung bis zu einem minimalen Wert verringert und bei weiterer Verringerung der Windleistung die Dieselmaschine 7 gemäß Fig. 1 eingeschaltet;

c) Ein Spannungsregler 16 ist am elektrisch autonomen Netz 5 angeschlossen, wobei die gemessene Netzspannung 17 als Parameter zugeführt wird und welche an die Wicklungen des elektrischen Generators 6 angeschlossen ist. Die Regelung wirkt durch eine mehr oder weniger große Feldstärkesteuerung dieses Generators 6.

Der Umsetzer 8 aus Fig. 1 wird in Fig. 2 in ausführlicherer Form wiedergegeben. Der Gleichrichter 2o aus Fig. 1 ist in Fig. 2 durch 21 wiedergegeben, während der Wechselrichter durch 22 wiedergegeben wird. Hier wird auf diese Weise ein Dreiphasen-Brücken-Mutator dargestellt. Um das Reaktivvermögen des Mutators 22 zu beschränken, ist es möglich, einen Durchlaßregelungsthyristor zu verwenden.

Die Verwendung des schon erwähnten netzkommutierten Umsetzers 8 ist ein wesentlicher Teil des neuen Systems. Die Gleichstromschaltung macht das System sehr flexibel. Die Rotorgeschwindigkeit der Windturbine wird dabei unabhängig von der Netzfrequenz gewählt, derart, daß diese immer eine maximale Menge Energie liefert. Mehrere

Windturbinen oder andere variable Energiequellen können parallel in dasselbe Energiesystem geschaltet werden, wobei jede Windturbine - wenn gewünscht - gesondert regelbar ist. Vorzugsweise sind die Energiequellen im Gleichstromteil parallel geschaltet.

Anlage 1

Turbineneigenschaften

Es ist bekannt, daß im allgemeinen die Wingeschwindigkeit sehr schnell wechseln kann. Hierbei entstehen sowohl Schwankungen in sehr kurzer Zeit als auch über eine längere Dauer. Diese Schwankungen können mittels der sehr schnellen Regeleigenschaften des Systems aufgefangen werden.

Die allgemeine Formel für die durch die Achse der Wind-turbine abgegebene Leistung ist:

$$P_w = C_p \frac{1}{2} \, \pi \, R^2 \rho \, v^3, \qquad (a)$$

worin v : die Windgeschwindigkeit,

R : den Rotordurchmesser,

$\rho$ : die Luftdichte und

$C_p$ : den Arbeitskoeffizienten, abhängig von der Umlaufgeschwindigkeit und dem Typ der Wind-turbine, bedeuten.

Dabei ist $\lambda = \frac{\omega R}{V}$ und darin

$\omega$ die Winkelgeschwindigkeit der Windturbine.

ln Fig. 3 ist ein Beispiel einer Kurve des Koeffizienten C als Funktion der Umlaufgeschwindigkeit $\lambda$ für eine zwei-flügelige Windturbine mit horizontaler Achse angegeben.

Aus dieser Figur zeigt sich, daß $\lambda$ optimal ist, wenn $C_p$ einen Wert von o,46 hat. Andere Turbinen können andere Kurven ergeben. Das allgemeine Bild bleibt jedoch ungefähr gleich. Allgemein gilt nach Formel (a), daß zur Gewinnung einer maximalen Energiemenge aus dem Wind $C_p$ maximal sein muß. Es zeigt sich, daß der $\lambda$-Wert eine bestimmte Größe zu sein scheint, wobei dies der Fall ist.

Aus Fig. 3 zeigt sich, daß die Leistung, die aus dem Wind geholt werden kann, bei niedrigen Werten von $\lambda$ klein ist. Dies bedeutet, daß der Wind bei niedrigen Rotorgeschwindigkeiten einen zu kleinen Anteil liefern kann, um die Verluste im gesamten Energiesystem kompensieren zu können. Hierdurch ist das Starten der Windturbine ausschließlich durch den Wind nicht immer möglich. Um das Starten zu ermöglichen, wird der erste synchrone Generator 3 als Asynchronmotor benutzt. Dieser wird gespeist über eine Drehstromverbindung mit dem zweiten Generator 6, der durch das Hilfsaggregat 7 (Dieselmotor) angetrieben wird.

Aus Formel (a) zeigt sich, daß die abgegebene Menge Energie $P_w$ der dritten Potenz der Windgeschwindigkeit entspricht und deshalb in Anbetracht der großen Schwankungen davon noch viel stärker betroffen ist. Die Schwankungen von $P_w$ können, wenn es sich um sehr kurze Zeit handelt, durch einen synchronen Generator 6 mit einem großen Trägheitsmoment J aufgefangen werden, was in der folgenden Anlage "Systembeherrschung" besprochen werden soll.

Anlage 2

Systembeherrschung

Die Leistungsbilanz des Systems – wie in den Fig. 1 und 2 wiedergegeben – wird bei Benutzung einer Dieselmaschine 7 gegeben durch:

$$P_{diesel} + P_{aut} = P_e + P_\ell + P_v + J\omega' \frac{d\omega'}{dt}, \qquad (b)$$

worin

$P_{diesel}$    die Leistung durch die Dieselmaschine 7,

$P_{aut}$    die Leistung durch den Wind an das autonome Netz 5,

$P_\ell$    die Leistung, die das autonome Netz 5 aufnimmt,

$P_v$    den Leistungsverlust im synchronen Generator 6,

$P_e$    die Leistung für den zusätzlich nutzbaren Verbraucher 2 durch Heißwassererzeugung, Elektrolyse von Wasser und dergleichen,

$J$    Trägheitsmoment des synchronen Generators 6,

$\omega'$    Winkelgeschwindigkeit des synchronen Generators 6 in rad/s,

$(\omega'$    eine andere Winkelgeschwindigkeit als die, die sich auf die Windturbine 1 bezieht)

bedeuten.

Wenn:

$$P_{aut} > P_v + P_\ell \;,$$

kann im Prinzip die Dieselmaschine 7 ausgeschaltet werden. In diesem Fall ist $P_{diesel} = 0$. Der Wind ist jetzt die einzige Energiequelle für das autonome Netz 5. Der synchrone Generator 6 bleibt jedoch ein wesentliches Teil des ganzen Energiesystems.

Der synchrone Generator 6 übernimmt jetzt die Kommutation von Wechselrichter 22 für seine Rechnung und bestimmt die Spannungsform des Dreiphasennetzes 5. Die Reaktivleistung, gewünscht durch die Netzbelastung $P_\ell$ und die Wechselrichter 22, wird durch den synchronen Generator 6 geliefert. Die Netzspannung kann auf konstantem Wert bleiben, indem die Feldregelung des zweiten synchronen Generators eingestellt wird. Den Überschuß an Windenergie, welcher nicht auf andere Weise für die Netzbelastung $P_L$ oder für den Verlust $P_v$ im synchronen Generator 6 benötigt wird, leitet man in Richtung des zusätzlich nutzbaren Verbrauchers $P_e$.

Wenn ein großes Angebot an Windenergie verfügbar ist, zeigt sich aus der Formel (b), daß mit Hilfe des zusätzlich nutzbaren Verbrauchers $P_e$ die Möglichkeit besteht, den Leistungsstrom zum Netz 5 zu beherrschen. Die Drehgeschwindigkeit des synchronen Generators 6, welche die Frequenz des autonomen Netzes bestimmt, wird dadurch beeinflußt.

Angesichts der manchmal besonders schnellen Schwankungen im Angebot der Windenergie ist es nützlich, diese Schwankungen sowie Schwankungen durch verschiedene

Netzbelastung $P_L$ soviel wie möglich mittels eins großen Trägheitsmoments J des synchronen Gnerators 6 auszugleichen. Die rotierende Masse des Generators 6 ist in diesem Fall imstande, eine bestimmte Menge Energie zu speichern oder zu liefern. Sobald die Menge der gespeicherten Energie dabei zu groß oder zu klein wird, wird mehr bzw. weniger Energie an den zusätzlich nutzbaren Verbraucher $P_e$ zugeführt.

Patentansprüche:

1. Verfahren zum optimalen Benutzen mindestens einer variablen, schwer beherrschbaren Energiequelle durch Verwendung eines Energiesystems, das neben der Energiequelle einen oder mehrere damit gekuppelte synchrone Wechselstromgeneratoren benutzt, welche mit einem Gleichrichter, einem Wechselrichter und mit einem daran angeschlossenen autonomen Wechselstromnetz verbunden sind, wobei das Wechselstromnetz elektrisch fest mit einem zweiten synchronen Wechselstromgenerator verbunden ist, der mechanisch mit einer beherrschbaren Hilfsmaschine entkuppelbar verbunden ist, dadurch gekennzeichnet, daß aus dem Energiesystem eine solche Energiemenge entnommen wird, daß die Frequenz des Netzes konstant bleibt.

2. Verfahren nach Anspruch 1, dadurch gekennzeichnet, daß als variable Energiequelle mindestens eine Windturbine verwendet wird.

3. An einem autonomen Wechselstromnetz angeschlossene Anlage zur Durchführung des Verfahrens nach Anspruch 1, im wesentlichen bestehend aus einem ersten Wechselstromgenerator, der an einem Gleichrichter und einem Wechselrichter gekuppelt ist, wobei der Wechselrichter das Netz speist und ein zweiter synchroner Generator elektrisch fest mit dem Netz verbunden und mechanisch mit einer beherrschbaren Hilfsmaschine entkuppelbar ist, dadurch gekennzeichnet, daß die Anlage (1, 18, 3, 2o, 19, 4, 6, 5) einen zusätzlich nutzbaren elektrischen Verbraucher (2) aufweist, welcher über eine Regelvorrichtung (1o, 14) elektrisch mit der Anlage verbunden ist.

4. Anlage nach Anspruch 3, dadurch gekennzeichnet, daß der erste synchrone Generator (3) Teil einer Windturbine (1, 18, 3) ist.

5. Anlage nach Anspruch 4, dadurch gekennzeichnet, daß der zusätzlich nutzbare Verbraucher (2) mit dem autonomen Netz (5) verbunden ist.

6. Anlage nach den Ansprüchen 3 und 4, dadurch gekennzeichnet, daß der zusätzlich nutzbare Verbraucher (2) mit dem Gleichstromteil zwischen dem Gleichrichter (2o) und dem Wechselrichter (4) verbunden ist.

7. Anlage nach den Ansprüchen 3 und 4, dadurch gekennzeichnet, daß der zusätzlich nutzbare Verbraucher (2) mit dem Wechselstromteil zwischen dem ersten Generator (3) und dem Gleichrichter (2o) geschaltet ist.

8. Anlage nach den Ansprüchen 3, 4 und 5 oder 7, dadurch gekennzeichnet, daß dem zusätzlich nutzbaren Verbraucher (2) ein regelbarer Gleichrichter (1o) vorgeschaltet ist.

9. Verfahren nach den Ansprüchen 1 und 2, dadurch gekennzeichnet, daß die abzuleitende Energie für die Heißwasserbereitung, die Elektrolyse von Wasser, kombiniert mit der Benutzung von Brennstoffzellen, oder für das Aufladen von Batterien oder das Hochpumpen von Wasser benutzt wird.

1o. Anlage nach den Ansprüchen 3 bis 8, dadurch gekennzeichnet, daß der Wechselrichter (4) ein Dreiphasen-Brücken-Mutator (11, 22) ist.

11. Anlage nach den Ansprüchen 3 bis 8, dadurch gekennzeichnet, daß jeder synchrone Generator (6) ein großes Trägheitsmoment hat.

12. Anlage nach den Ansprüchen 3 bis 8, 1o und 11, dadurch gekennzeichnet, daß die leicht beherrschbare Hilfsmaschine eine entkuppelbare Dieselmaschine (7) ist.

13. Verfahren nach den Ansprüchen 1, 2 und 9, wobei mindestens eine Windturbine Energie an ein autonomes elektrisches Netz sowie an einen zusätzlich nutzbaren Verbraucher liefert, dadurch gekennzeichnet, daß gleichzeitig drei Regelsysteme verwendet werden können, und zwar:

a) eine Regelung der Drehzahl (12) der Windturbinen (1), welche verbunden ist mit an diese Windturbinen gekuppelten elektrischen synchronen Generatoren (3) und gesteuert durch die durch den Wind an diese Turbinen (1) abgegebene Leistung $P_w$ und die Winkelgeschwindigkeit des Rotors dieser Turbinen (13);

b) eine Regelung der Frequenz des elektrischen autonomen Netzes (5) durch Steuerung des zusätzlich nutzbaren Verbrauchers (2) und gesteuert von der durch den Wind an die Turbine/n abgegebenen Leistung $P_w$, der elektrischen Belastung P des autonomen Netzes (5) und der Frequenz dieses Netzes;

c) eine Spannungsregelung (16) des autonomen elektrischen Netzes (5), welche an den synchronen Generatoren (6) im autonomen Netz (5) angeschlossen ist und durch die Netzspannung (7) selber gesteuert wird.

14. Anlage nach einem der Ansprüche 3 bis 8 und 1o bis 12,
gekennzeichnet durch Mittel, um die Netzspannung durch
die Feldsteuerung der synchronen Generatoren (6)
konstant zu halten.

FIG.1

FIG.2

$P_W$ $P_J$

FIG. 3

Europäisches
Patentamt

**EUROPÄISCHER RECHERCHENBERICHT**

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der maßgeblichen Teile | betrifft Anspruch | |
| | GB - A - 2 006 998 (R.J.A. EVANS et al.)  * Seite 1, Zeilen 5-47; Seite 2, Zeilen 18-55; Figuren 1,2 * | 1-3,7, 9,13 | H 02 J 3/38 H 02 P 9/42 F 03 D 9/00 |
| | JOURNAL A., Band 20, Nr. 3, Juli 1979, Seiten 151-159 Antwerpen, BE. A.J.T.M. KOENRAADS et al.: "Some aspects of the Dutch National Research Programme for Wind Energy" | 2,4,13 | |
| | * Seite 156, linke Spalte, Zeile 25 - rechte Spalte, Zeile 35; Seite 158, Absatz "10. Controllers in the system"; Figuren 9,10 * | | RECHERCHIERTE SACHGEBIETE (Int Cl.³) |
| | DE - B - 1 281 027 (LICENTIA)  * Spalte 1, Zeilen 1-7; Spalte 4, Zeile 45 - Spalte 5, Zeile 11; Figur 1 * | 12-14 | H 02 J 3/38 H 02 P 9/42 F 03 D 9/00 H 02 J 3/14 H 02 K 19/14 |
| D | & NL - A - 67 08733 | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-11-1981 | POINT |

EPA form 1503.1  06.78